# EUROPÄISCHE PATENTSCHRIFT

(11) **EP 2 797 392 B1**
(45) Veröffentlichungstag und Bekanntmachung des Hinweises auf die Patenterteilung: **31.07.2019**
(21) Anmeldenummer: 14154983.2
(22) Anmeldetag: 13.02.2014
(51) Int. Cl.: H05B 39/04

(54) **Verfahren zum Dimmen eines Leuchtmittels gemäß dem Phasenanschnittsverfahren**
Method for dimming a luminous element according to the phase angle method
Procédé d'atténuation d'un agent lumineux selon le procédé de découpage de phase

(30) Priorität: 25.04.2013 DE 102013104202
(43) Veröffentlichungstag der Anmeldung: 29.10.2014
(73) Patentinhaber: Insta GmbH, 58509 Lüdenscheid (DE)
(72) Erfinder: Krause, Karl-Heinz, 58809 Neuenrade (DE)

(56) Entgegenhaltungen:
- EP-A1- 2 094 065
- EP-A2- 2 020 830
- EP-A2- 2 094 066
- EP-A2- 2 360 991
- WO-A1-2011/008635
- DE-A1- 19 734 107
- DE-U1- 20 314 200
- JP-A- H1 027 692
- JP-A- 2006 032 030
- JP-A- 2008 053 181
- US-A- 6 046 550
- US-A1- 2005 122 055

## Beschreibung

Die Erfindung betrifft ein Verfahren zum Dimmen zumindest eines Leuchtmittels im Zwei-Draht-Betrieb gemäß dem Phasenanschnittsverfahren, bei dem in Abhängigkeit von der Höhe der bereitzustellenden Spannung die Spannung zum Leuchtmittel erst ab einem bestimmten Phasenwinkel innerhalb einer Halbwelle mittels eines Timers, dessen Timerend-Wert zum Einstellen unterschiedlicher Dimmeinstellungen gewählt wird, durchgeschaltet und im nächsten Nulldurchgang zur kommenden Halbwelle wieder getrennt wird und bei dem zur Erzeugung des die Helligkeit des Leuchtmittels bestimmenden Phasenwinkels ein R/C-Glied entsprechend voreingestellt wird.

Bei Einsatz von elektronischen Dimmern zum Ansteuern von Lasten, beispielsweise zum Einstellen der Helligkeit eines oder mehrerer, an einen solchen Dimmer angeschlossenen Leuchtmittel wird gemäß dem Phasenanschnittsverfahren nur ein Teil einer Wechselspannungshalbwelle an die Last durchgeschaltet. Je kleiner der an die Last durchgeschaltete Halbwellenanteil ist, je geringer ist der der Last zur Verfügung stehende Strom, weshalb ein Leuchtmittel sodann eine geringere Helligkeit abstrahlt. Dieser Vorgang wiederholt sich in jeder Halbwelle. Die Stromversorgung der Last ist somit abhängig von dem Zeitpunkt, in dem innerhalb einer Halbwelle die Spannung zu der Last durchgeschaltet wird. Dieser Zeitpunkt wird anhand des Winkels innerhalb der Halbwelle als Phasenwinkel bezeichnet. Die verzögerte Stromversorgung der Last erreicht man unter Verwendung zumeist eines Triac, der erst dann durchschaltet, wenn er einen hierfür erforderlichen Zündimpuls durch einen Diac erhält. Beim nachfolgenden Nulldurchgang wird die Durchschaltung wieder aufgehoben. Der Zündimpuls wird durch den Kondensator eines R/C-Gliedes erzeugt, wobei die Ladezeit des Kondensators in Abhängigkeit von der gewünschten Dimmung entsprechend eingestellt wird. Diesem Zweck dient in aller Regel ein Potentiometer. Die Ladezeit des Zündkondensators beginnt mit dem Stromnulldurchgang des Laststroms, der bei ohm'schen Lasten im Nulldurchgang der Wechselspannung entsteht und wird bei Erreichen der Schwellspannung, die der für den Zündimpuls notwendigen Spannung des Diac entspricht, beendet. Ein bestimmungsgemäßes Dimmen, beispielsweise eines Leuchtmittels, ist bei diesem Verfahren von dem Stromnulldurchgang abhängig, durch die der Ladevorgang des Zündkondensators getriggert wird. Treten allerdings Phasenverschiebungen zwischen dem tatsächlichen Nulldurchgang und dem erkannten Nulldurchgang auf, die sich bedingt durch die Realisierung der verwendeten Last im nicht leitenden Zustand des Dimmers zu unterschiedlichen Zeitpunkten der Netzspannung wieder aufheben, kann dieses aufgrund dann instabiler Zustände zu einem Flackern des als Last eingesetzten Leuchtmittels führen. Auch ist vor allem bei größerer Helligkeiten über den Dimmer vor dem Hintergrund der kurzen Ladezeit durch niedrige Spannung über den Dimmer ein stabiler Dimmbetrieb und eine ausreichende Spannungsversorgung des Dimmers selbst nicht immer gegeben.

Das Vorstehende stellt sich vor allem beim Dimmen von Lasten mit kapazitivem Verhalten ein, da ein erkannter Nulldurchgang nicht dem tatsächlichen Nulldurchgang entsprechen muss, mithin der erfasste Nulldurchgang nicht das reale Abbild des tatsächlichen Nulldurchganges der Wechselspannungshalbwelle darstellt. Daher lassen sich Leuchtmittel mit einem derartigen Verhalten, wie beispielsweise LEDs oder Kompaktleuchtstofflampen, die in aller Regel Kondensatoren in ihren Ansteuerschaltungen aufweisen, mit einer Phasenanschnittssteuerung nicht, jedenfalls nicht ohne Weiteres bestimmungsgemäß dimmen, vor allem dann nicht, wenn diese Leuchtmittel im Zwei-Draht-Betrieb angeschlossen sind.

Die WO 2011/008635 A1 offenbart eine LED-Lampe mit wenigstens einer LED, einer Dimmersteuereinheit sowie einem Leistungsumwandler. Die Dimmersteuereinheit ist dazu eingerichtet, den Typ eines Dimmers, an den die Lampe angeschlossen ist, sowie eine Dimmstellung zu erkennen und ein Steuersignal zur Steuerung des Stroms durch die LED zu erzeugen, das der Dimmstellung entspricht. Der Leistungsumwandler empfängt das Steuersignal und stellt der LED einen Strom zur Verfügung, der der Lichtintensität entspricht, die durch die Dimmstellung angegeben ist. Die LED-Lampe ist zum Anschluss an handelsübliche, konventionelle Dimmer vorgesehen, die im Phasenanschnitt- oder Phasenabschnittverfahren arbeiten können.

Aus DE 203 14 200 U1 ist eine Vorrichtung zum Ansteuern einer Last im Phasenanschnitt- oder Phasenabschnitt-Verfahren bekannt. Diese Vorrichtung hat einen Eingang für eine Wechselspannung sowie einen Ausgang für eine Last. Über den Ausgang kann mittels zweier Leistungstransistoren eines Wechselspannungstellers eine einer gewünschten Leistung entsprechende Wechselspannung bereit gestellt werden. Die Leistungstransistoren werden über ein Rechtecksignal angesteuert, dass seinerseits über einen Regelkreis gesteuert wird. Um die Phasenverschiebung bei kapazitiver oder induktiver Last auszugleichen, wird die Stromflusszeit am Ausgang gemessen und mit einem Soll-Wert verglichen. Bei einer Abweichung wird die Phase des Rechtecksignals verschoben, bis der Soll-Wert hergestellt ist.

Der Erfindung liegt daher die Aufgabe zugrunde, ein Phasenanschnittsverfahren vorzuschlagen, mit dem sich auch kapazitiv verhaltende Lasten, wie beispielsweise LED-Leuchtmittel oder Kompaktleuchtstofflampen mit integriertem Vorschaltgerät verbessert dimmen lassen.

Gelöst wird diese Aufgabe erfindungsgemäß durch ein eingangs genanntes, gattungsgemäßes Verfahren, bei dem
- Starten des Ladevorganges des Zündkondensators des R/C-Gliedes durch eine Freigabe, deren Freigabezeitpunkt zeitlich verschoben zu dem tatsächlichen Nulldurchgang der Halbwelle ist,
- Erfassen der zum Laden des Zündkondensators des R/C-Gliedes benötigte Zeit als IST-Ladezeit,
- Vergleichen der IST-Ladezeit mit einer festgelegten, an einer ohm'schen Last bestimmten, Referenzladezeit als SOLL-Ladezeit und
- Ändern des Freigabezeitpunktes bei Feststellen einer Abweichung zwischen der IST-Ladezeit und der SOLL-Ladezeit derart, dass die IST-Ladezeit an die SOLL-Ladezeit angepasst wird.

Bei diesem Verfahren wird im Unterschied zu herkömmlichen Verfahren der Ladevorgang des Zündkondensators nicht mit dem Erkennen eines Halbwellennulldurchganges gestartet. Vielmehr wird der Ladevorgang des Zündkondensators um eine bestimmte Zeitspanne bzw. einen bestimmten Winkel innerhalb der Halbwelle verschoben zu dem erfassten Nulldurchgang getriggert. Dabei ist der zeitliche Versatz zwischen dem Zeitpunkt des Erfassens eines Halbwellennulldurchganges und dem Beginn des Ladevorganges des Kondensators einrichtbar. Mit diesem Verfahren ist es daher möglich, die Ladezeit des Zündkondensators in bestimmten Grenzen konstant zu halten. Damit ist Sorge dafür getragen, dass selbst bei größeren Helligkeiten über den Dimmer, das heißt: dass die Last die maximal mögliche Strommenge bezieht, auch die Stromversorgung des Dimmers selbst sichergestellt ist. Um dieses zu erreichen, wird die Ladezeit des Zündkondensators in einer aktuellen Halbwelle erfasst und mit einer Referenzladezeit - einer SOLL-Ladezeit - verglichen. Die Referenzladezeit ist typischerweise an einer ohm'schen Last bestimmt worden. Wird eine Abweichung zwischen der IST-Ladezeit und der SOLL-Ladezeit festgestellt, wird der Freigabezeitpunkt zum Starten des Ladevorganges des Kondensators geändert, und zwar dergestalt, dass in nachfolgenden Halbwellen die IST-Ladezeit eine bessere Übereinstimmung mit der SOLL-Ladezeit aufweist. Es versteht sich, dass der Ladebeginnzeitpunkt des Zündkondensators nicht in jedem Fall bei Feststellen einer Differenz zwischen der SOLL-Ladezeit und der IST-Ladezeit vorgenommen werden muss, sondern nur, wenn die Differenz eine gewisse Größe als Schwellwert überschritten hat. Eine bessere Übereinstimmung der IST-Ladezeit mit der SOLL-Ladezeit wird bei Bereitstellen einer nicht hinreichenden Übereinstimmung dadurch herbeigeführt, dass bei Feststellen einer zu kurzen Ladezeit verglichen mit der SOLL-Ladezeit die Ladezeit verlängert wird, mithin der Winkel in der Halbwelle, in dem der Ladevorgang des Zündkondensators beginnt - der Ladebeginnzeitpunkt - entsprechend vorverschoben wird, wodurch wiederum der zeitliche Abstand zwischen einem erfassten Nulldurchgang und dem Ladebeginnzeitpunkt verringert wird. Entsprechend umgekehrt wird vorgegangen, wenn die IST-Ladezeit die SOLL-Ladezeit überschreitet. Die Anpassung der IST-Ladezeit an die SOLL-Ladezeit kann um die festgestellte Differenz oder auch in zuvor festgelegten diskreten Schritten erfolgen. In letzterem Fall wird die IST-Ladezeit typischerweise in mehreren Schritten der SOLL-Ladezeit angeglichen.

Durch das vorbeschriebene Konstanthalten der Ladezeit des Zündkondensators, wobei der Ladebeginnzeitpunkt um einen gewissen Winkel gegenüber einem erkannten Nulldurchgang verschoben ist, sind instabile Zustände innerhalb des Dimmers vermieden, die bei einem Leuchtmittel als Last ein Flackern zur Folge haben könnten. Gleichzeitig ist durch die Verschiebung des Ladebeginnzeitpunktes des Zündkondensators gegenüber dem erfassten Nulldurchgang auch die Spannungsversorgung des Dimmers in jeder Halbwelle unabhängig von der Dimmstellung in hinreichendem Maße gewährleistet.

Das beanspruchte Verfahren eignet sich somit vor allem zum Ansteuern von Lasten mit kapazitivem Verhalten, wie beispielsweise LEDs oder Kompaktleuchtstofflampen, vor allem solche mit integriertem Vorschaltgerät.

Von dem eingangs diskutierten Stand der Technik unterscheidet sich das beanspruchte Verfahren somit vor allem dadurch, dass bei dem Verfahren gemäß dem Stand der Technik unterschiedliche Dimmstellungen über unterschiedlich lange Aufladezeit eingestellt werden. Daher spielt bei den vorbekannten Verfahren allein die Ladungsmenge des R/C-Gliedes eine Rolle. Beim Gegenstand der beanspruchten Erfindung wird hingegen die Ladezeit des Kondensators konstant gehalten, und zwar unabhängig von der Dimmstellung. Durch dieses Verfahren wird nicht nur, wie vorbeschrieben, eine sichere Stromversorgung des Dimmers unabhängig von der Dimmstellung gewährleistet, sondern Verschiebungen eines erkannten Nulldurchganges gegenüber dem tatsächlichen Nulldurchgang wirken sich nicht nachteilig aus, da der Ladebeginnzeitpunkt gegenüber dem erfassten Nulldurchgang ohnehin verschoben ist.

Bei einer Weiterbildung dieses Verfahrens, mit dem kapazitive Lasten sich in besonders einfacher Art und Weise bestimmungsgemäß dimmen lassen, ist aufgrund des kapazitiven Verhaltens dieser Lasten mit relativ hohen Einschaltströmen zu rechnen. Diese können in die Größenordnung der Ansprechschwelle der in aller Regel vorhandenen Schutzfunktionen des Dimmers liegen. Zum Schutze des Dimmers wird daher in einer Weiterbildung des vorbeschriebenen Verfahrens beim Einschaltvorgang eine andere Ansteuerung der Last vorgenommen. Angesteuert werden derartige Lasten im Zusammenhang mit dem Einschaltvorgang und somit allein in der ersten oder den ersten Halbwellen bei dieser Ausgestaltung nicht phasenanschnittsgesteuert, sondern phasenabschnittsgesteuert. Hierdurch lassen sich Stromspitzen reduzieren. Nach einer oder nach einigen ersten aufeinander folgenden Halbwellen wird dann auf die vorbeschriebene Phasenanschnittssteuerung umgeschaltet. Es versteht sich, dass eine solche Ansteuerung einer kapazitiven Last, etwa eines Leuchtmittels mit kapazitivem Verhalten über einen Dimmer nicht nur in Verbindung mit dem beanspruchten Phasenanschnittssteuerungsverfahren, sondern auch unabhängig hiervon und somit mit herkömmlichen Phasenanschnittssteuerungsverfahren eingesetzt werden kann.

Nachfolgend ist die Erfindung unter Bezugnahme auf die beigefügten Figuren anhand eines Beispiels beschrieben. Es zeigen:
- **Fig. 1:**: eine Oszilloskopaufzeichnung zum Darstellen des erfindungsgemäßen Verfahrens,
- **Fig. 2:**: eine Oszilloskopaufzeichnung entsprechend derjenigen der Figur 1 nach dem Einschalten einer an den Dimmer angeschlossenen LED-Last und
- **Fig. 3:**: eine Oszilloskopaufzeichnung darstellend den Betrieb des Dimmers wenige Halbwellen nach dem Aufnahmezeitpunkt der Aufzeichnung der Figur 2.

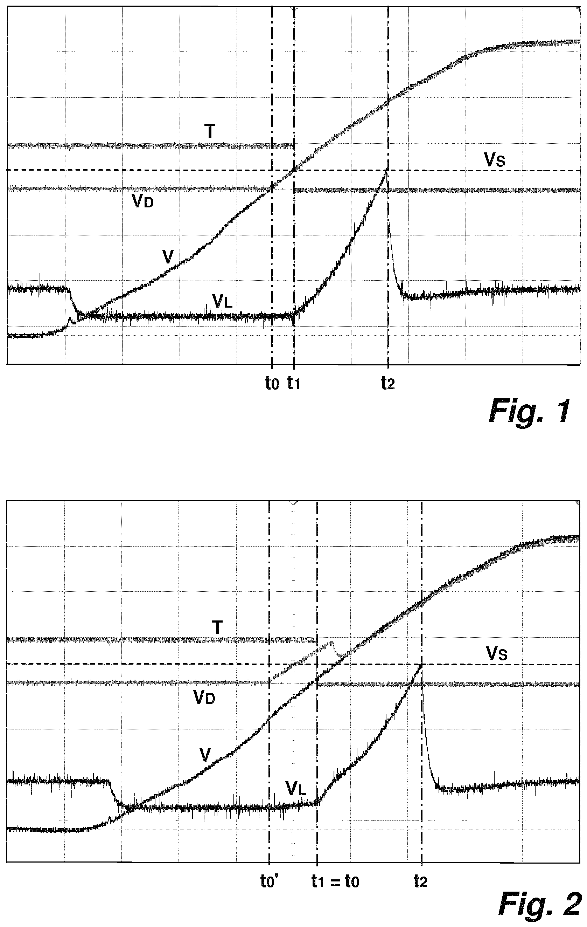

In der in Figur 1 gezeigten Oszilloskopaufzeichnung ist die Netzspannung V und der Zeitpunkt to eines Halbwellennulldurchganges angegeben zum Erläutern des Betriebs eines Dimmer. Dieses sei für die Betrachtung der Aufzeichnung der Figur 1 der Ausgangspunkt. Aufgetragen sind zudem die Spannung V_{D} über den Dimmer, bezogen auf die Dimmermasse, die Ladespannung V_{L} des Zündkondensators des R/C-Gliedes sowie ein Triggersignal T, durch das der Ladebeginn des Zündkondensators getriggert wird.

Über das Triggersignal T wird mit zeitlichem Versatz zu dem Nulldurchgang im Zeitpunkt to des in Figur 1 dargestellten Halbwellenteils der Netzspannung V der Ladevorgang des Zündkondensators gestartet. Dieses ist im Zeitpunkt t₁. Zum gleichen Zeitpunkt beginnt die Ladespannung V_{L} des Zündkondensators anzusteigen. Der Ladevorgang wird beendet, wenn der Zündkondensator eine Schwellspannung Vs erreicht hat. Dieses ist im Zeitpunkt t₂ der Fall. Das Zeitintervall zwischen t₁ und t₂ bildet die Aufladezeit des Zündkondensators, die bei dem dargestellten Ausführungsbeispiel 1,6 ms beträgt. Der Zeitpunkt t₂ dient als Referenz zur Erzeugung des Einschaltzeitpunktes, in dem der Dimmer zur Last durchgeschaltet wird, so dass der Rest der Halbwelle der Last zur Verfügung gestellt wird.

Um unterschiedliche Dimmstellungen zu erzeugen, wird im Zeitpunkt t₂ ein Timer gestartet, der den Einschaltzeitpunkt bestimmt. Zum stärkeren Dimmen der Last wird der Timerend-Wert höher gewählt, anderenfalls kürzer.
Die Oszillatoraufzeichnung der Figur 1 zeigt den Betrieb des Dimmers mit einer ohm'schen Last.

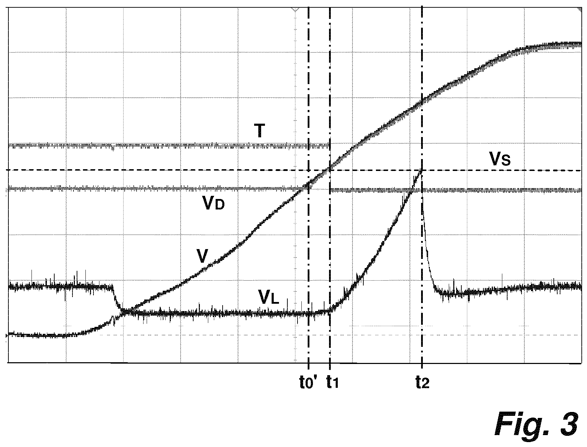

Figur 2 zeigt eine Oszilloskopaufzeichnung entsprechend derjenigen der Figur 1, bei der an den Dimmer eine LED-Lampe als Last mit kapazitivem Verhalten angeschlossen ist. Deutlich erkennbar ist eine scheinbare Verschiebung der Halbwelle zu erkennen, wodurch die Aufladezeit des Zündkondensators verlängert wird. Der verschobene Nulldurchgang ist mit to' in Figur 2 kenntlich gemacht. Die Phasenverschiebung wird in der in dieser Aufzeichnung wiedergegebenen Kurve V_{D} gegenüber der Netzspannung V erkennbar. Das Zeitintervall zwischen t₁ - Beginn des Ladevorganges des Zündkondensators - und t₂ (Erreichen der Schwellspannung Vs) ist mit 1.83 ms erfasst worden. Damit liegt diese IST-Ladezeit oberhalb der als SOLL-Ladezeit bzw. Referenzladezeit zuvor festgelegten Ladezeit von 1,6 ms. Infolge der bestimmungsgemäßen Regelung wird nunmehr der Ladebeginnzeitpunkt t₁ verschoben, damit die IST-Ladezeit an die SOLL-Ladezeit angepasst wird (s. Figur 3). Auf diese Weise wird die in der Oszilloskopaufzeichnung in Figur 2 erkennbare Abweichung (Phasenverschiebung) korrigiert, was sodann nach wenigen Halbwellen zu einer Oszilloskopaufzeichnung führt, die derjenigen der Figur 1 entspricht. Die Ladezeit des Zündkondensators des R/C-Gliedes beträgt darin wieder 1,6 ms. Aus Figur 3 wird somit ersichtlich, dass aufgrund der Regelung der erfasste Nulldurchgang to' wieder to entspricht.

Die Erfassung der Ladezeit des Zündkondensators wird regelmäßig erfasst und ausgewertet. Bei Abweichungen gegenüber der Soll-Ladezeit wird entsprechend der Zeitpunkt t₁ verschoben, um die Ladezeit des Kondensators bei etwa 1,6 ms einzuregeln.

Durch diese Regelung ist neben den bereits beschriebenen Vorteilen auch eine ausreichende Dunkelstellung bei Einsatz von Lichtquellen als Lasten einstellbar.

## Patentansprüche

1. Verfahren zum Dimmen zumindest eines Leuchtmittels im Zwei-Draht-Betrieb gemäß dem Phasenanschnittsverfahren, bei dem in Abhängigkeit von der Höhe der bereitzustellenden Spannung die Spannung zum Leuchtmittel erst ab einem bestimmten Phasenwinkel innerhalb einer Halbwelle mittels eines Timers, dessen Timerend-Wert zum Einstellen unterschiedlicher Dimmeinstellungen gewählt wird, durchgeschaltet und zum Zeitpunkt des nächsten Nulldurchgangs der kommenden Halbwelle wieder getrennt wird und bei dem zur Erzeugung des die Helligkeit des Leuchtmittels bestimmenden Phasenwinkels ein R/C-Glied entsprechend voreingestellt wird, **gekennzeichnet durch** folgende Regelungsschritte,
- Starten des Ladevorganges des Zündkondensators des R/C-Gliedes durch eine Freigabe, deren Freigabezeitpunkt zeitlich verschoben zu dem Zeitpunkt des tatsächlichen Nulldurchgangs der kommenden Halbwelle ist,
- Erfassen der zum Laden des Zündkondensators des R/C-Gliedes benötigten Zeit als IST-Ladezeit,
- Vergleichen der IST-Ladezeit mit einer festgelegten, an einer ohm'schen Last bestimmten Referenzladezeit als SOLL-Ladezeit und
- Ändern des Freigabezeitpunktes bei Feststellen einer Abweichung zwischen der IST-Ladezeit und der SOLL-Ladezeit derart, dass die IST-Ladezeit an die SOLL-Ladezeit angepasst wird.

2. Verfahren nach Anspruch 1, **dadurch gekennzeichnet, dass** das Ändern des Freigabezeitpunkts und damit das Anpassen der IST-Ladezeit an die SOLL-Ladezeit in iterativen, diskreten Schritten erfolgt.

3. Verfahren nach einem der Ansprüche 1 bis 2 **dadurch gekennzeichnet, dass** als Leuchtmittel LEDs und/oder Kompaktleuchtstofflampen, Letztere insbesondere mit integriertem Vorschaltgerät angesteuert werden.

4. Verfahren nach Anspruch 3 **dadurch gekennzeichnet, dass** die Ansteuerung im Zusammenhang mit dem Einschaltvorgang des oder der Leuchtmittel in der ersten Halbwelle oder gegebenenfalls in wenigen nachfolgenden Halbwellen zunächst phasenabschnittsgesteuert erfolgt und anschließend das oder die Leuchtmittel durch das Verfahren zum Dimmen gemäß dem Phasenanschnittsverfahren nach Maßgabe der vorangehenden Ansprüche angesteuert werden.

## Claims

1. Process for leading-edge phase dimming of at least one lamp in two-wire-operation, in which, depending on the level of voltage to be provided, the voltage to the lamp is only switched through from a certain phase angle within one half-wave by means of a timer whose timer-end-value is chosen to make different dimmer settings, and with the next zero crossing of the coming half-wave is disconnected again, and in which an R/C element is preset accordingly to generate the phase angle determining the brightness of the lamp, **characterized by** the following control steps,
- Starting the loading process of the ignition capacitor of the R/C element by a release, whose release time is offset to the time of the actual zero crossing of the coming half-wave,
- Detecting the time needed for loading the ignition capacitor of the R/C element as ACTUAL loading time,
- Comparing the ACTUAL loading time with a set reference loading time determined by an ohmic load as SET loading time and
- Changing the release time, if a deviation between ACUTAL loading time and SET loading time is detected, in a way that the ACTUAL loading time is adapted to the SET loading time.

2. Process in accordance with Claim 1, **characterized by the fact** that the modification of the release time and thus the adaptation of the ACTUAL loading time to the SET loading time is effected in iterative, discrete steps.

3. Process in accordance with any of Claims 1 to 2, **characterized by the fact** that LEDs and/or compact fluorescent lamps, the latter notably with integrated ballast, are controlled as lamps.

4. Process in accordance with Claim 3, **characterized by the fact** that the activation in connection with the switch-on process of the lamp/lamps in the first half-wave or, if applicable, in a few subsequent half-waves is initially effected by trailing-edge phase control and afterwards the lamp/lamps is/are controlled by the process for dimming according to the leading-edge principle in accordance with the preceding claims.

## Revendications

1. Procédé de variation l'intensité lumineuse d'au moins une ampoule en mode bifilaire selon le procédé à coupure de phase ascendante, dans lequel, en fonction de l'amplitude de la tension à fournir, la tension à l'ampoule n'est commutée qu'à un angle de phase spécifique dans une demi-onde à l'aide d'un timer dont la valeur finale est sélectionnée pour régler différents réglages de variation et est coupée à nouveau lors du prochain rétour au zéro de la demi-onde suivante, et dans lequel un élément R/C est préréglé pour la génération de l'angle de phase qui détermine la luminosité de l'ampoule, **caractérisé par** les étapes de commande suivantes:
- démarrage du processus de chargement du condensateur d'allumage de l'élément R/C par une autorisation dont le temps d'autorisation est retardé au moment du rétour au zéro effectif de la demi-onde suivante,
- Enregistrement du temps nécessaire pour charger le condensateur d'allumage de l'élément R/C comme temps de chargement RÉEL,
- Comparaison du temps de chargement RÉEL avec un temps de chargement de référence fixe déterminé à une charge ohmique comme temps de chargement SET et
- Modification du temps d'autorisation lorsqu'un écart est détecté entre le temps de chargement RÉEL et le temps de chargement SET de sorte que le temps de chargement RÉEL soit adapté au temps de chargement SET.

2. Procédé selon la revendication 1, **caractérisé en ce que** la modification du temps d'autorisation et donc l'adaptation du temps de chargement RÉEL au temps de chargement SET s'effectue par étapes itératives et discrètes.

3. Procédé selon l'une des revendications 1 à 2, **caractérisé en ce que** des lampes à LED et/ou des lampes fluorescentes compactes, en particulier celles avec ballast intégré, sont commandées comme ampoules.

4. Procédé selon la revendication 3, **caractérisé en ce que** l'activation en liaison avec le processus d'allumage de la ou des ampoules dans la première demi-onde ou, le cas échéant, dans quelques demi-ondes suivantes est d'abord effectuée à coupure de phase descendante et la ou les ampoules sont ensuite activées par le procédé de gradation à coupure de phase ascendante conformément aux revendications précédentes.
